(19) **Europäisches Patentamt European Patent Office Office européen des brevets**

(11) **EP 2 074 005 B1**

(12) **FASCICULE DE BREVET EUROPEEN**

(45) Date de publication et mention de la délivrance du brevet:
**11.05.2011 Bulletin 2011/19**

(21) Numéro de dépôt: **07858520.5**

(22) Date de dépôt: **08.10.2007**

(51) Int Cl.:
*B60W 20/00* (2006.01)     *B60K 6/48* (2007.10)
*B60W 10/06* (2006.01)     *B60W 10/08* (2006.01)
*B60W 10/26* (2006.01)

(86) Numéro de dépôt international:
**PCT/FR2007/052089**

(87) Numéro de publication internationale:
**WO 2008/053107 (08.05.2008 Gazette 2008/19)**

(54) **PROCÉDÉ DE GESTION D'ÉNERGIE D'UNE CHAÎNE DE TRACTION D'UN VÉHICULE HYBRIDE ET VÉHICULE HYBRIDE**

VERFAHREN ZUR STEUERUNG VON ENERGIE IN DER ANTRIEBSKETTE EINES HYBRIDFAHRZEUGS UND HYBRIDFAHRZEUG

METHOD FOR CONTROLLING ENERGY IN THE TRACTION CHAIN OF A HYBRID VEHICLE AND HYBRID VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **27.10.2006 FR 0654590**

(43) Date de publication de la demande:
**01.07.2009 Bulletin 2009/27**

(73) Titulaire: **PEUGEOT CITROËN AUTOMOBILES S.A.**
**78140 Vélizy Villacoublay (FR)**

(72) Inventeurs:
- **JUNCA, Carlos**
  **75015 Paris (FR)**
- **MULOT, Vincent**
  **75015 Paris (FR)**

(56) Documents cités:
**EP-A- 1 447 256      EP-A2- 0 759 370**
**DE-A1- 19 906 601      US-A- 6 116 363**
**US-A1- 2002 107 618      US-A1- 2003 217 876**

**EP 2 074 005 B1**

## Description

L'invention concerne les stratégies de gestion des énergies qui sont mises en jeu au sein des véhicules hybrides (thermique/électrique)

Elle concerne plus particulièrement un procédé de gestion d'énergie d'une chaîne de traction d'un véhicule hybride qui a pour but de minimiser la consommation en carburant et de préserver la durée de vie des moyens de stockage d'énergie électrique.

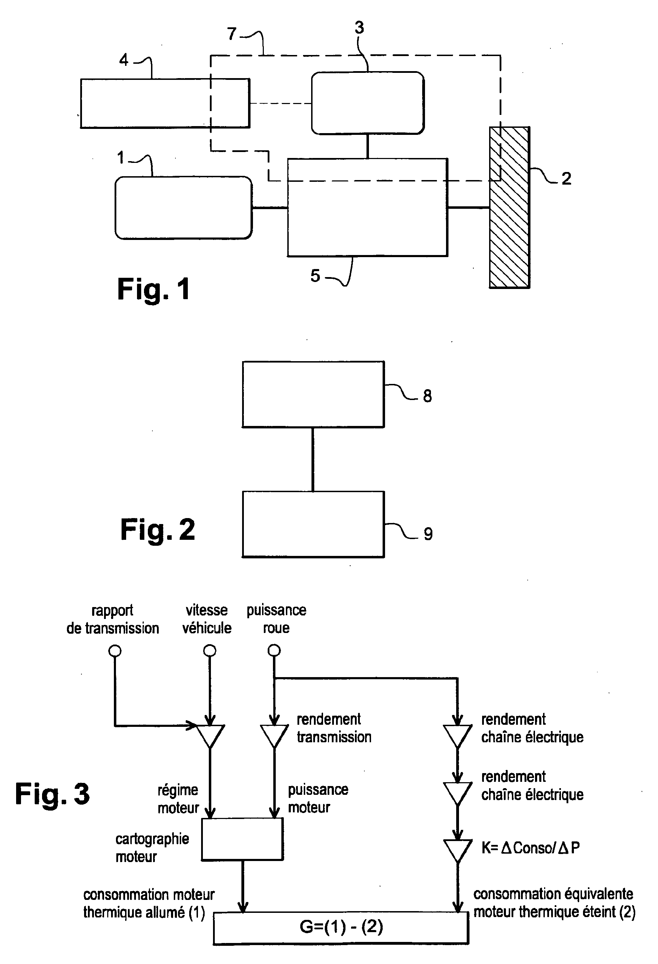

Une chaîne de traction hybride est illustrée schématiquement à la figure 1.

Une telle chaîne de traction comporte typiquement un moteur thermique 1 fournissant une énergie mécanique aux roues motrices 2 du véhicule (une seule roue est représentée), une ou plusieurs machines électriques 3 (une seule machine électrique est représentée) fournissant une énergie électrique aux roues 2 du véhicule, des moyens de stockage de l'énergie électrique 4, des moyens 5 de transmission des énergies mécanique et électrique aux roues 2 du véhicule, et des moyens 7 de récupération d'énergie électrique délimités par une ligne fermée discontinue.

Un des moyens de récupération d'énergie possible dit également « naturel » est, par exemple l'utilisation de la machine électrique en générateur de courant au moment d'une décélération. La machine électrique fonctionnant alors en générateur transforme l'énergie mécanique/cinétique reçue des roues en énergie électrique.

Il est connu, notamment du document EP0759370 et du document DE19906601, une régulation d'une chaîne de traction d'un véhicule hybride telle que décrite ci-dessus comportant une sélection du mode de conduite (thermique/ électrique) en fonction du rendement du mode de conduite en électrique.

Selon ces documents, on compare deux valeurs d'une quantité physique pour décider du mode de conduite afin d'optimiser la consommation en carburant.

Il est donc nécessaire de connaître en permanence cette consommation.

Dans ces documents, la consommation du moteur thermique est calculée à partir du rendement moyen du moteur thermique déterminé de manière empirique, à partir d'un historique de roulages.

L'utilisation du rendement moteur pour le calcul de la consommation du moteur thermique donne des résultats peu précis puisque dans le rendement, on inclut les pertes liées au régime moteur.

Le procédé selon l'invention a notamment pour but de pallier cet inconvénient en proposant une solution à la fois plus simple et plus précise.

Selon l'invention, la consommation est calculée à partir d'un coefficient qui correspond à une caractéristique des moteur thermiques connue sous l'appellation de consommation « marginale »

**[0013]** - A cet effet, l'invention a pour premier objet, un procédé de gestion d'énergie d'une chaîne de traction d'un véhicule hybride conforme à l'objet de la revendication 1.

Le procédé selon l'invention consiste, en outre, dans une troisième étape supplémentaire, à utiliser une information sur l'état de charge des moyens de stockage d'énergie électrique pour déterminer la puissance du moteur thermique juste nécessaire pour satisfaire la demande de puissance à la roue quand la décision d'allumer le moteur thermique a été prise.

En plus d'optimiser la consommation de carburant, le procédé selon l'invention va dans le sens à préserver la durée de vie de des moyens de stockage de l'énergie électrique.

Par moyens de stockage d'énergie électrique, on entend tout moyen ayant une capacité de réserve d'énergie électrique telle que par exemple, une super capacité ou une batterie d'accumulateurs. Pour simplifier, la description, nous utiliserons le terme batterie pour définir les moyens de stockage.

L'invention a également pour objet un véhicule hybride comportant une chaîne de traction hybride du type décrit précédemment et comportant en outre des moyens de commande mettant en oeuvre le procédé selon l'invention tel que défini ci-dessus.

D'autres caractéristiques et avantages de la présente invention apparaîtront à la lecture de la description détaillée qui va suivre, en regard des dessins annexés, donnés à titre d'exemple non limitatif et sur lesquels :

- la figure 1, déjà décrite, représente une architecture simplifiée d'une chaîne de traction hybride de l'état de l'art ;
- la figure 2 représente un organigramme des deux premières étapes du procédé selon l'invention ;
- la figure 3 représente un synoptique de la première étape du procédé selon l'invention ;
- la figure 4, représente une cartographie des courbes de régimes en fonction de la consommation du moteur thermique ;
- la figure 5a montre le parcours de l'énergie mécanique, moteur thermique allumé (chemin 1), dans le cadre de la première étape du procédé selon l'invention ;
- la figure 5b montre le parcours de l'énergie mécanique, moteur éteint (chemin 2), dans le cadre de la première étape du procédé selon l'invention ;
- la figure 6 représente un synoptique de la deuxième étape du procédé selon l'invention ;
- la figure 7a montre le parcours de l'énergie mécanique, moteur thermique allumé, (chemin 3) et la prise en compte de la récupération de l'énergie additionnelle, moteur thermique éteint (chemin 3'), dans le cadre de la deuxième étape du procédé selon l'invention ;

- la figure 7b montre le parcours de l'énergie mécanique (4) avec la prise en compte de la récupération de l'énergie additionnelle pour assister le moteur thermique (chemin 4'), dans le cadre de la deuxième étape du procédé selon l'invention ;
- la figure 8 montre l'évolution du critère d'arrêt du moteur thermique en fonction de l'état de charge des moyens de stockage d'énergie électrique ;
- la figure 9 représente un synoptique de la troisième étape du procédé selon l'invention ;
- la figure 10a montre le parcours de l'énergie mécanique, moteur thermique allumé (chemin 5), dans le cadre de la troisième étape du procédé selon l'invention ;
- la figure 10b montre le parcours de l'énergie mécanique, avec utilisation des moyens de stockage (chemin 6), dans le cadre de la troisième étape du procédé selon l'invention ; et
- la figure 11 montre l'évolution de la puissance délivrée par les moyens de stockages d'énergie électrique, moteur thermique allumé, en fonction de l'état de charge des moyens de stockage/

Sur les figures; les mêmes références sont utilisées pour désigner les mêmes éléments.

Le procédé selon l'invention est illustré par l'organigramme de la figure 2.

Il consiste dans une première étape 8 à déterminer le gain de consommation du moteur thermique puis dans une deuxième étape 9, à décider d'allumer ou d'éteindre le moteur thermique en fonction d'un critère déterminé et du gain de consommation.

La première étape 8 est illustrée par le synoptique de la figure 3.

Cette première étape est basée sur le calcul du gain de consommation G potentiel associé à l'arrêt du moteur thermique à un moment donné du parcours. C'est en effectuant ce calcul en temps réel et en comparant le résultat de ce calcul à un coefficient déterminé, que l'on décide si le moteur thermique doit rester allumé ou doit être éteint.

On décrit ci-après, la façon de calculer ce gain G.

Dans cette première étape 8, on ne considère ni la récupération d'énergie ni les sources d'énergie externes au moteur thermique. La seule source d'énergie considérée est celle fournie par le moteur thermique.

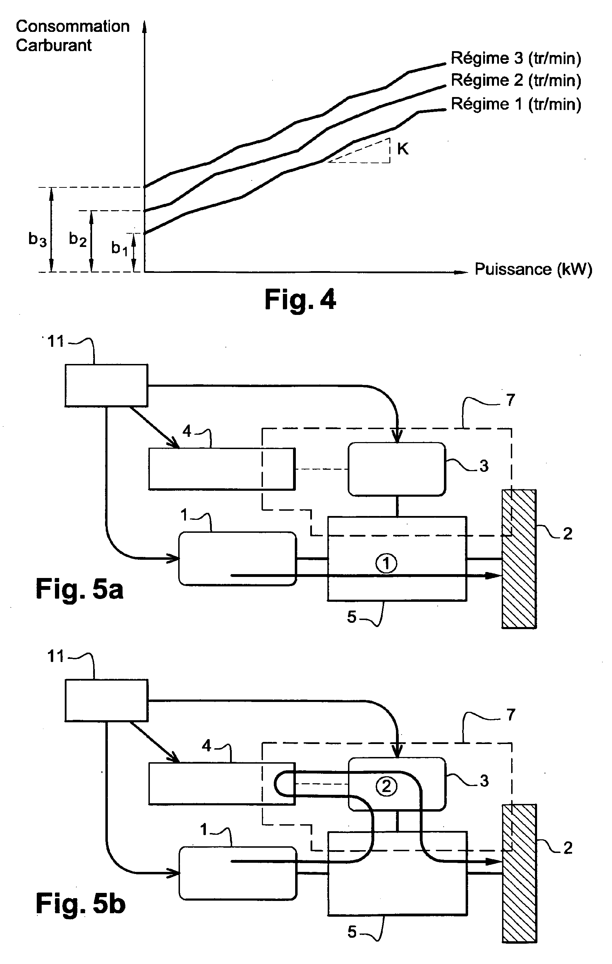

La consommation du moteur thermique à un moment donné est déterminée à partir d'une cartographie de mesures de régimes qui donne la consommation du moteur en fonction de sa puissance et de son régime. Une telle cartographie est illustrée à la figure 4 qui représente trois courbes de régimes, respectivement 1, 2 et 3, exprimés en tour/minute (tr/min) dans un repère présentant la consommation en carburant, en ordonnée, exprimée en gramme/seconde (g/s), et la puissance, en abscisse, exprimée en kilowatt (kW). La puissance est celle nécessaire à la roue pour assurer la traction, aux pertes de la transmission près. Ni le rapport de transmission (ou le régime moteur), ni la vitesse ne sont gérés par le procédé selon l'invention. On considère qu'ils ont été optimisés au préalable pour assurer l'ensemble des prestations véhicule (consommation, agrément, performances).

La figure 5a montre le parcours de l'énergie mécanique lorsque le moteur est allumé (chemin 1). L'énergie mécanique est transmise directement aux roues vis les moyens de transmission.

Sur cette figure et sur les figures suivantes illustrant les parcours des énergies dans la chaîne de traction hybride, on a représenté les moyens de récupérations 7 à l'intérieur d'un contour fermé délimité par une ligne discontinue. De même, on a représenté par un bloc 11 les moyens de commande utilisés par le procédé selon l'invention pour commander l'allumage ou l'arrêt du moteur thermique 1.

La consommation équivalente, moteur thermique éteint, est estimée selon le raisonnement suivant : lors du roulage en mode électrique pur, la consommation réelle du moteur thermique est nulle, mais la batterie (source de puissance de la machine électrique) se décharge. Cette décharge est égale à la puissance nécessaire à la roue pour assurer la traction, aux pertes de transmission près. Étant donné qu'in fine, la seule source d'énergie est le moteur thermique, la batterie ne servant que de relais, cette décharge en mode électrique pur doit être compensée par une recharge ultérieure lorsque le moteur thermique est rallumé. C'est pour cela que le rendement de la chaîne électrique est symbolisé deux fois sur la figure 3. Ensuite, en faisant l'approximation qu'un delta de puissance du moteur thermique est proportionnel au surplus de consommation occasionnée (cf. figure 4), la consommation équivalente, moteur thermique éteint, est égale à la puissance à la roue, augmentée des pertes dans la chaîne électrique lors de la décharge et de la recharge, multiplié par un coefficient de proportionnalité K. Autrement dit, le coefficient de proportionnalité K est égal au rapport entre un delta de consommation et un delta de puissance moteur pour un régime déterminé.

Les propriétés du moteur thermique confèrent à ce coefficient K une relative constance en fonction de son régime et de son couple. Cette constance confère précision et simplicité à la stratégie par rapport à l'utilisation d'un rendement global moyen du moteur qui varie significativement en fonction du régime et du couple.

La figure 5b montre le parcours de l'énergie lorsque le moteur thermique est éteint. L'énergie fournit par le moteur thermique transite par la chaîne électrique. Elle est matérialisée par une flèche en trait continu (chemin 2). Enfin, le gain de consommation G est déterminé par la différence des deux consommations. Si ce gain G est positif la décision d'arrêter le moteur thermique est prise.

On donne ci-après, à titre non limitatif, un exemple dans lequel un véhicule roule à une vitesse de 30 km/h pendant une période T (par exemple 100 secondes), et roule ensuite à 100 km/h pendant la période T+1 (100 secondes).

On se pose la question d'arrêter ou pas le moteur thermique pendant la période T. Pour simplifier, on a négligé les pertes dans la liaison mécanique (boîte de vitesses) :

a) Si on n'arrête pas le moteur thermique, la machine électrique n'est pas utilisée et sa consommation est celle d'un véhicule conventionnel.

b) Si on arrête le moteur thermique pendant la période T, la consommation du véhicule pendant cette période est nulle, mais la batterie, qui fournit la puissance nécessaire pour le roulage du véhicule, se décharge. Afin de garder un niveau de charge constant dans la batterie, on doit la recharger pendant la période T+1. Le moteur doit alors fournir la puissance nécessaire à la fois pour le roulage du véhicule et pour la recharge de la batterie.

En comparant les deux consommations a) et b), on observe un gain de consommation de carburant lorsqu'on éteint le moteur thermique pendant la période T.

Avec le procédé selon invention, on peut estimer ce gain G à tout moment lorsqu'on connaît les paramètres physiques du moteur thermique ; K et b, (en fonction du régime) et le rendement moyen de la chaîne électrique.

Le gain G peut s'exprimer par la formule suivante :

G = Consommation en mode thermique - Consommation équivalente en mode électrique
soit

$$G = [ Pmth.K + b(Nmth)] - [ Pmth.K / \eta elec^2]$$

Avec
Pmth = puissance fournie parle moteur thermique
K = coefficient de proportionnalité définit par cartographie prédéterminée du moteur thermique
Nmth = régime du moteur thermique
b = partie de consommation qui dépend uniquement du régime moteur Nmth $\eta$elec = rendement de la chaîne électrique

La consommation en mode thermique s'exprime par la somme de la puissance fournie par le moteur thermique, multiplié par le coefficient K, et de la partie de consommation b qui dépend uniquement du régime (cf. figure 4). A un régime moteur Régime 1, 2, 3, ... correspond une consommation b1, 2, 3, ...

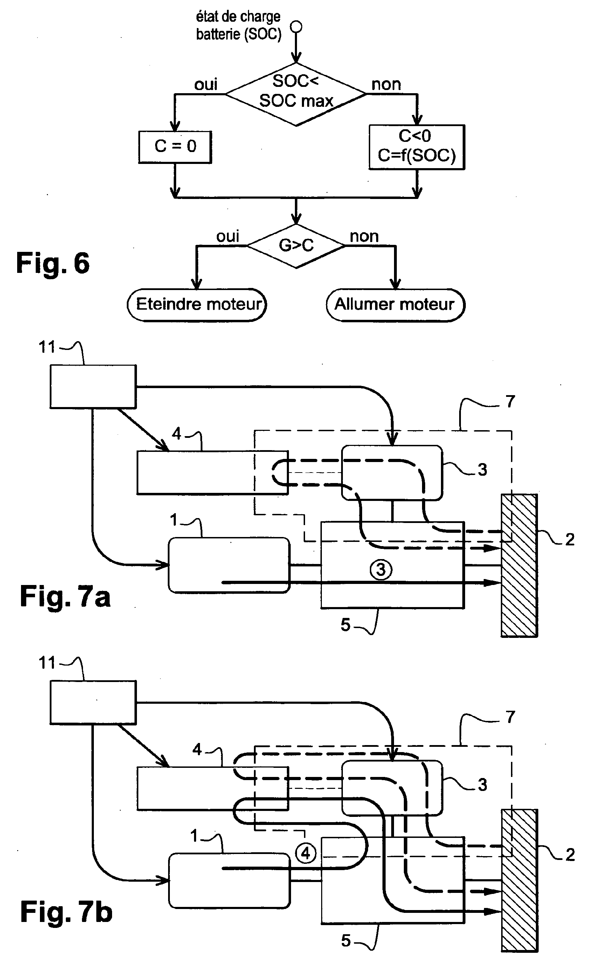

Dans la deuxième étape 9 du procédé selon l'invention, telle qu'illustrée par le synoptique de la figure 6, on prend en compte l'énergie additionnelle fournie par les moyens de récupération d'énergie lors des décélérations, ou par toute autre source d'énergie embarquée ou externe, dans la décision d'allumage/ arrêt du moteur thermique.

L'énergie récupérée par les moyens de récupération est utilisée d'une façon optimale pour assurer la traction dans les phases moteur thermique éteint. Cette énergie n'est pas utilisée pour assister le moteur thermique à fournir de la puissance lorsqu'il est allumé.

Dans un premier mode de gestion, l'énergie récupérée est utilisée dans les phases de traction, moteur thermique éteint, et l'énergie du moteur thermique est utilisée directement par la roue dans les phases moteur thermique allumé. Ce premier mode de gestion permet d'augmenter la durée de vie de la batterie contrairement à un mode gestion dans lequel la batterie est sollicitée en permanence.

Le parcours de l'énergie fournie directement par le moteur thermique aux roues via les moyens de transmission est matérialisé à la figure 7a par une flèche en trait continu (chemin 3). Le chemin de l'énergie récupérée par les moyens de récupération et restituée aux roues, est matérialisé par une flèche en trait discontinu (chemin 3').

Dans un deuxième mode de gestion, l'énergie récupérée par les moyens de récupération est utilisée pour assister le moteur thermique dans les phases de traction, et l'énergie nécessaire pour financer les arrêts du moteur thermique est fournie par le moteur thermique lui-même lorsqu'il est allumé.

Le parcours de l'énergie fournie aux roues par le moteur thermique, assisté par les moyens de récupération, est matérialisé sur la figure 7b (chemin 4) par une flèche en trait continu. Le parcours de l'énergie récupérée par les moyens de récupération et restitué aux roues est matérialisé par une flèche en trait discontinu (chemin 4').

Le premier mode de gestion est alors privilégié par rapport au deuxième, étant donné que dans le deuxième mode, les pertes dans la chaîne électrique sont supérieures et la batterie est donc plus sollicitée.

Le moyen utilisé par le procédé selon l'invention pour déterminer le niveau de récupération des moyens de récupération, est l'état de charge de la batterie. Ainsi, lorsque l'état de charge de la batterie est supérieure à une limite haute déterminée (SOCmax) de la zone de fonctionnement nominale de la batterie, un critère C est utilisé pour déterminer l'arrêt du moteur thermique. Il est adapté en temps réel afin d'accroître l'utilisation de la batterie et d'arrêter le plus souvent possible le moteur thermique. Dans la pratique, on admet l'arrêt du moteur lorsque le gain G, calculé dans la première étape, est supérieur au critère C, C devenant négatif et croissant en fonction de l'état de charge.

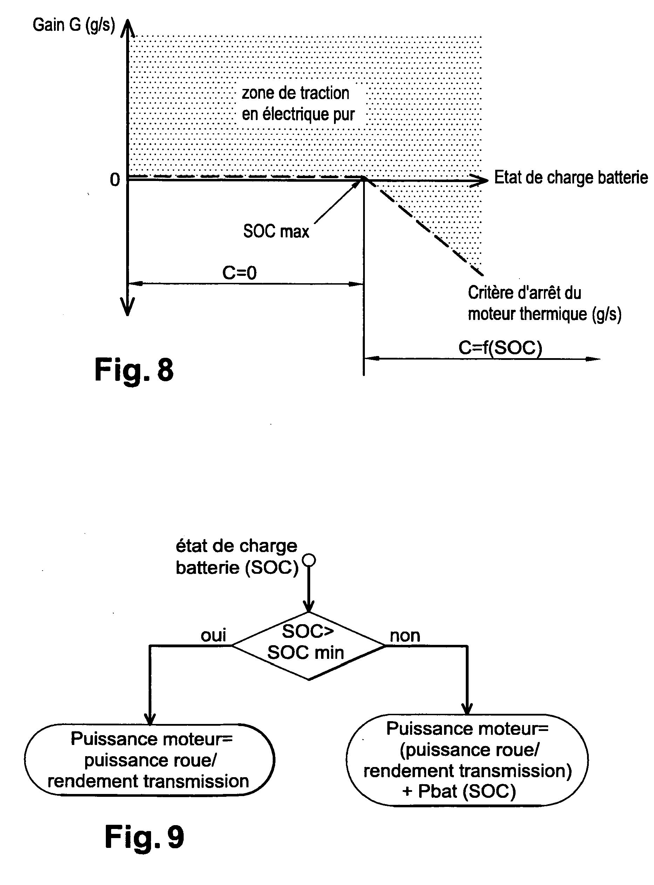

La figure 8 illustre une représentation graphique du critère C, exprimé en gramme par seconde (g/s), dans un repère dans lequel on a représenté le gain G en ordonnée, exprimé en gramme par seconde (g/s), et l'état de charge de la batterie en abscisse, exprimé en %.

Selon cette représentation, le critère C, représenté par un trait discontinu, peut se décomposer en deux parties successives : une première partie dans laquelle le critère C est nul jusqu'à la limite supérieure SOCmax déterminée et une deuxième partie dans laquelle le critère C suit une fonction décroissante déterminée en fonction de l'état de charge de la batterie C= f(SOC).

La zone dite de traction en électrique pur, est représentée sur la figure par un nuage de points ; elle est délimitée par le critère C.

Pour illustrer le principe, en reprenant un exemple pratique non limitatif, on considère que pendant une période T-1 (100 secondes), le véhicule récupère une certaine quantité d'énergie augmentant le niveau de charge de la batterie. Ensuite, pendant une période T (100 secondes), le véhicule roule à une vitesse de 50 km/h sur une légère pente. Finalement, le véhicule roule à une vitesse constante de 100 km/h pendant la période T+1 (100 secondes). On se pose alors la question d'arrêter ou pas le moteur thermique pendant la période T.

a) Si on n'arrête pas le moteur thermique pendant la période T, l'énergie stockée dans la batterie est utilisée pour assister le moteur thermique dans les périodes T et T+1.

b) Si on arrête le moteur thermique pendant la période T, la consommation du véhicule pendant cette période est nulle, et la traction est assurée par l'énergie stockée dans la batterie. Pendant la période T+1, la machine électrique n'est pas utilisée et la consommation du véhicule est celle du véhicule conventionnel. En comparant les deux cas a) et b) on observe un gain de consommation lorsqu'on éteint le moteur thermique pendant la période T. Et cela, même si le calcul du gain G pour les conditions de roulage de la période T donne un gain proche de zéro et négatif.

En effet, lorsque l'état de charge de la batterie est très élevé (au début de la période T), le critère d'arrêt du moteur thermique C devient négatif (cf. figure 8). Ainsi, pour la situation de roulage de la période T, les moyens de commande demandent un arrêt du moteur thermique.

On a donc démontré, grâce au procédé selon l'invention, qu'il est plus avantageux d'arrêter le moteur lorsque le niveau de charge de la batterie est élevé (grâce à l'énergie récupérée) même si le calcul du gain G est nul ou devient négatif.

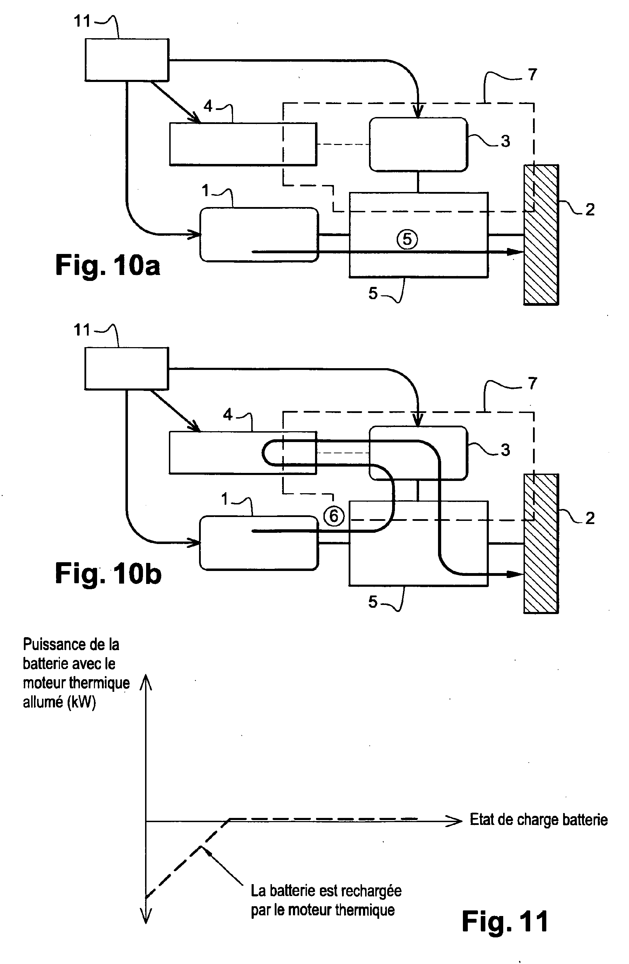

Dans une troisième étape 12, illustré par le synoptique de la figure 9, le procédé détermine la puissance du moteur, une fois que la décision de l'allumer a été prise. Le principe est de fournir la puissance juste nécessaire pour satisfaire la demande de puissance à la roue. La figure 10a montre le parcours de l'énergie fournie par le moteur thermique directement aux roues via les moyens de transmission, le parcours est matérialisé par une flèche en trait continu (chemin 5).

Dans l'hypothèse qu'un delta de puissance du moteur thermique est proportionnel à un delta de consommation, l'utilisation de la batterie avec le moteur thermique allumé pénalise la consommation globale puisque un delta de puissance moteur à un moment donné doit être compensé ultérieurement par le même delta de puissance augmenté des pertes électriques. La figure 10b montre le parcours de l'énergie fournie par le moteur thermique prenant en compte la batterie, le parcours est matérialisé par une flèche en trait continu (chemin 6).

Cependant, dans le cas où la récupération par les moyens de récupération ne permet pas de financer la totalité des arrêts du moteur thermique dans les zones intéressantes (zones où le gain G est positif), le procédé est amené à commander la recharge de la batterie.

Selon l'invention, le procédé utilise l'état de charge de la batterie pour mesurer le niveau de récupération des moyens de récupération. Ainsi, lorsque l'état de charge de la batterie est inférieur à une limite basse déterminée (SOCmin) de la zone de fonctionnement nominal de la batterie, le moteur thermique fournit un surplus de puissance afin de recharger la batterie et faire revenir son état de charge dans la zone nominale. Etant donné que les pertes dans la chaîne électrique et l'usure de la batterie sont proportionnelles au carré de la puissance, la recharge de la batterie est réalisée d'une façon progressive jusqu'à un état de charge maximum déterminé. En d'autres termes, la puissance du moteur est accrue d'une puissance Pbat, Pbat étant décroissante en fonction de l'état de charge.

La figure 11 illustre l'évolution de la recharge de la batterie dans un repère dans lequel on a représenté la puissance de la batterie, moteur thermique allumé, en ordonnée, exprimée en kilowatt (kW), et l'état de charge de la batterie en abscisse, exprimé en %.

Toujours pour donner une illustration du principe, on considère par exemple, que pendant une période T (100 secondes), le véhicule roule à une vitesse de 100 km/h avec le moteur thermique allumé. Pendant une période T+1 (100 secondes), le véhicule roule encore une fois à 100 avec le moteur thermique allumé. On se pose la question d'utiliser ou pas la machine électrique pendant la période T.

a) Si on n'utilise pas la machine électrique pendant la période T, la consommation est celle du véhicule conventionnel.
b) Si on utilise la machine électrique pendant la période T pour assister le moteur thermique, les batteries sont déchargées et il va falloir les recharger pendant la période T+1.

En comparant les deux cas a) et b), on observe une perte de consommation lorsqu'on utilise la machine électrique pendant la période T.

On a donc démontré, grâce au procédé selon l'invention qu'il faut éviter d'utiliser la machine électrique lorsque le moteur thermique est allumé (si l'état de charge de la batterie le permet).

Les principes de base utilisés par le procédé selon l'invention sont simples, basés sur des approximations physiques, et non pas sur le résultat de méthodes d'optimisation complexes. D'autre part, la portabilité du procédé est aisée sur des nouvelles applications.

Le procédé est simple, comparé aux procédés utilisés actuellement dans les prototypes de véhicules hybrides, la puissance des calculateurs embarqués nécessaire s'en trouve réduite.

**Revendications**

1.   Procédé de gestion d'énergie d'une chaîne de traction d'un véhicule hybride comportant un moteur thermique (1) fournissant une énergie mécanique aux roues (2) du véhicule, au moins une machine électrique (3) fournissant une énergie électrique aux roues du véhicule (2), des moyens de récupération d'énergie électrique (7), des moyens (4) de stockage de l'énergie électrique, et des moyens (5) de transmission des énergies mécanique et électrique aux roues (2) du véhicule, **caractérisé en ce qu'**il consiste :

- dans une première étape (8), à déterminer, en temps réel, le gain de consommation en carburant (G) du moteur thermique (1) en effectuant la différence entre la consommation du moteur thermique (1) allumé et la consommation équivalente moteur thermique (1) éteint, indépendamment d'autres sources d'énergie externes au moteur thermique (1) ; la consommation équivalente étant calculée à partir d'un coefficient déterminé (K) correspondant au rapport d'un delta de consommation et d'un delta de puissance moteur pour un régime déterminé ;
- dans une deuxième étape (9), à décider d'allumer ou d'éteindre le moteur thermique (1) en fonction d'un critère (C) et du gain de consommation (G), ledit critère (C) étant dépendant du niveau de récupération des moyens (7) de récupération d'énergie électrique et déterminé de manière à accroître l'utilisation des moyens (4) de stockage d'énergie électrique et arrêter le plus souvent possible le moteur thermique. (1) ;

le gain de consommation (G) s'exprimant par la formule suivante :

$$G = [\ Pmth.K + b(Nmth)]\ -\ [\ Pmth.K\ /\ \eta elec^2]$$

avec :

Pmth = puissance fournie par le moteur thermique
K = coefficient de proportionnalité
Nmth = régime du moteur thermique
b = partie de consommation qui dépend uniquement du régime moteur Nmth  $\eta$elec = rendement de la chaîne électrique.

2.   Procédé selon la revendication 1, **caractérisé en ce** le critère (C) est nul quand l'état de charge des moyens (4) de stockage d'énergie électrique est inférieur à un état de charge maximum déterminé (SOCmax).

3.   Procédé selon la revendication 1, **caractérisé en ce que** le critère (C) est négatif quand l'état de charge des moyens (4) de stockage d'énergie électrique est supérieure à un état de charge maximum déterminé (SOCmax) et répond à une fonction décroissante en fonction de l'état de charge des moyens (4) de stockage.

**EP 2 074 005 B1**

4. Procédé selon la revendication 2, **caractérisé en ce que** quand le critère (C) est nul et que le gain de consommation (G) est supérieur au critère (C), il consiste à éteindre le moteur thermique (1).

5. Procédé selon la revendication 3, **caractérisé en ce que** quand le critère (C) est négatif et que le gain de consommation (G) est supérieur au critère (C), il consiste à allumer le moteur thermique (1).

6. Procédé selon la revendication 5, **caractérisé en ce qu'**il consiste, dans une troisième étape (3) supplémentaire, à utiliser l'état de charge des moyens (4) de stockage d'énergie électrique pour déterminer la puissance du moteur thermique (1) juste nécessaire pour satisfaire la demande de puissance à la roue (2).

7. Procédé selon la revendication 6, **caractérisé en ce que** quand l'état de charge (SOC) des moyens (4) de stockage d'énergie est inférieur à un seuil minimum déterminé (SOCmin), il consiste à commander le moteur thermique (1) pour qu'il fournisse un surplus de puissance mécanique afin de recharger les moyens (4) de stockage d'énergie électrique par l'intermédiaire de la machine électrique (3) pour ramener l'état de charge à un niveau supérieur au seuil minimum (SOCmin).

8. Véhicule hybride comportant une chaîne de traction comportant un moteur thermique (1) fournissant une énergie mécanique aux roues (2) du véhicule, au moins une machine électrique (3) fournissant une énergie électrique aux roues (2) du véhicule, des moyens (7) de récupération d'énergie électrique, des moyens (4) de stockage de l'énergie électrique, et des moyens (5) de transmission des énergies mécanique et électrique aux roues (2) du véhicule, **caractérisé en ce qu'**il comporte en outre des moyens (11) de commandes mettant en oeuvre le procédé selon l'une des revendication 1 à 7.

**Claims**

1. A method for managing energy of a driving line of a hybrid vehicle including an engine (1) supplying mechanical energy to the vehicle wheels (2), at least one electrical machine (3) supplying electrical energy to the vehicle wheels (2), electrical energy recovering means (7), electrical energy storing means (4) and means (5) for transmitting mechanical and electrical energies to the vehicle wheels (2), **characterised in that** it consists in:

   - in a first step (8), determining, in a real time, the fuel consumption gain (G) of the engine (1) by making the difference between the consumption of the engine (1) being switched on and the equivalent consumption of the engine (1) being switched off, regardless of other energy sources external to the engine (1); the equivalent consumption being calculated from a determined coefficient (K) corresponding to the ratio of a consumption delta to an engine power delta for an engine speed determined;
   - in a second step (9), deciding to switch on or off the engine (1) depending on a criterion (C) and the consumption gain (G), said criterion (C) being dependent on a recovery level of the electrical energy recovering means (7) and determined so as to increase use of the electrical energy storing means (4) and shut down the engine (1) as often as possible;
   - the consumption gain (G) being expressed by the following formula:

$$G = [Pmth.K + b(Nmth)] - [Pmth.K/\eta elec^2]$$

   wherein:

   Pmth = power output by the engine K = proportionality coefficient
   Nmth = engine speed
   b = part of the consumption that only depends on the engine speed Nmth
   $\eta$elec = efficiency of the electrical line.

2. The method according to claim 1, **characterised in that** the criterion (C) is zero when the state of charge of the electrical energy storing means (4) is lower than a determined maximum state of charge (SOCmax).

3. The method according to claim 1, **characterised in that** the criterion (C) is negative when the state of charge of the electrical energy storing means (4) is higher than a determined maximum state of charge (SOCmax) and meets

7

a decreasing function depending on the state of charge of the storing means (4).

4. The method according to claim 2, **characterised in that** when the criterion (C) is zero and the consumption gain (G) is higher than a criterion (C), the method consists in switching off the engine (1).

5. The method according to claim 3, **characterised in that** when the criterion (C) is negative and the consumption gain (G) is higher than the criterion (C), the method consists in switching on the engine (1).

6. The method according to claim 5, **characterised in that** it consists in, in a further third step (3), using the state of charge of the electrical energy storing means (4) to determine the power of the engine (1) just necessary to meet the power requirement to the wheel (2).

7. The method according to claim 6, **characterised in that** when the state of charge (SOC) of the energy storing means (4) is lower than a determined minimum threshold (SOCmin), the method consists in controlling the engine (1) for supplying a mechanical power surplus in order to recharge the electrical energy storing means (4) through the electrical machine (3) to restore the state of charge to a level higher than the minimum threshold (SOCmin).

8. A hybrid vehicle including a driving line including an engine (1) supplying mechanical energy to the vehicle wheels (2), at least one electrical machine (3) supplying electrical energy to the vehicle wheels (2), electrical energy recovering means (7), electrical energy storing means (4), and means (5) for transmitting mechanical and electrical energies to the vehicle wheels (2), **characterised in that** it further includes control means (11) implementing the method according to any of claims 1 to 7.

**Patentansprüche**

1. Verfahren zur Energieverwaltung eines Antriebsstrangs eines Hybridfahrzeugs, umfassend eine Wärmekraftmaschine (1), die eine mechanische Energie an die Räder (2) des Fahrzeugs liefert, mindestens eine elektrische Maschine (3), die eine elektrische Energie an die Räder (2) des Fahrzeugs liefert, Mittel zur Wiedergewinnung (7) von elektrischer Energie, Mittel (4) zum Speichern von elektrischer Energie, und Mittel (5) zur Übertragung der mechanischen und elektrischen Energien an die Räder (2) des Fahrzeugs, **dadurch gekennzeichnet, dass** es aus folgenden Schritten besteht:

   - in einem ersten Schritt (8), die Echtzeit-Bestimmung der Zunahme des Benzinverbrauchs (G) der Wärmekraftmaschine (1) durch Ermittlung der Differenz zwischen dem Verbrauch bei eingeschalteter Wärmekraftmaschine (1) und dem entsprechenden Verbrauch bei ausgeschalteter Wärmekraftmaschine (1), unabhängig von anderen Energiequellen außerhalb der Wärmekraftmaschine (1); wobei der entsprechende Verbrauch anhand eines bestimmten Koeffizienten (K) berechnet wird, der dem Verhältnis eines Deltas des Verbrauchs und eines Deltas der Motorleistung für eine bestimmte Betriebsart entspricht;
   - in einem zweiten Schritt (9), die Entscheidung, ob die Wärmekraftmaschine (1) eingeschaltet oder ausgeschaltet werden soll, abhängig vom von einem Kriterium (C) und der Zunahme des Verbrauchs (G), wobei das Kriterium (C) abhängig ist von der Höhe der Wiedergewinnung der Mittel (7) zur Wiedergewinnung von elektrischer Energie und so bestimmt ist, dass die Verwendung der Mittel (4) zum Speichern von elektrischer Energie gesteigert und die Wärmekraftmaschine (1) so oft wie möglich ausgeschaltet wird; wobei die Zunahme des Verbrauchs (G) mit folgender Formel berechnet wird:

$$G = [Pmth.K + b(Nmth)] - [Pmth.K / \eta elec^2]$$

mit:

   Pmth = von der Wärmekraftmaschine gelieferte Leistung
   K = Proportionalitätskoeffizient
   Nmth = Betriebsart der Wärmekraftmaschine
   b = Teil des Verbrauchs, der ausschließlich von der Betriebsart Nmth des Motors abhängt
   $\eta$elec = Wirkungsgrad des Elektrostranges

**2.** Verfahren nach Anspruch 1, **dadurch gekennzeichnet, dass** das Kriterium (C) gleich Null ist, wenn der Ladungszustand der Mittel (4) zum Speichern von elektrischer Energie kleiner als ein bestimmter maximaler Ladungszustand (SOCmax) ist.

**3.** Verfahren nach Anspruch 1, **dadurch gekennzeichnet, dass** das Kriterium (C) negativ ist, wenn der Ladungszustand der Mittel (4) zum Speichern von elektrischer Energie größer als ein bestimmter maximaler Ladungszustand (SOCmax) ist und einer fallenden Funktion in Abhängigkeit vom Ladungszustand der Mittel (4) zum Speichern entspricht.

**4.** Verfahren nach Anspruch 2, **dadurch gekennzeichnet, dass**, wenn das Kriterium (C) gleich Null ist und die Zunahme des Verbrauchs (G) größer als das Kriterium (C) ist, es darin besteht, dass die Wärmekraftmaschine (1) ausgeschaltet wird.

**5.** Verfahren nach Anspruch 3, **dadurch gekennzeichnet, dass**, wenn das Kriterium (C) negativ ist und die Zunahme des Verbrauchs (G) größer als das Kriterium (C) ist, es darin besteht, dass die Wärmekraftmaschine (1) eingeschaltet wird.

**6.** Verfahren nach Anspruch 5, **dadurch gekennzeichnet, dass** es aus einem zusätzlichen dritten Schritt (3) besteht, bei dem der Ladungszustand der Mittel (4) zum Speichern von elektrischer Energie benutzt wird, um die exakte Leistung der Wärmekraftmaschine (1) zu bestimmen, die benötigt wird, um die Leistungsanforderung am Rad (2) zu erfüllen.

**7.** Verfahren nach Anspruch 6, **dadurch gekennzeichnet, dass**, wenn der Ladungszustand (SOCmax) der Mittel (4) zum Speichern von elektrischer Energie kleiner ist als ein bestimmter Schwellenwert (SOCmin), es darin besteht, dass die Wärmekraftmaschine (1) so gesteuert wird, dass sie einen Überschuss an mechanischer Leistung liefert, um mittels der elektrischen Maschine (3) die Mittel (4) zum Speichern von elektrischer Energie wieder aufzuladen und den Ladungszustand wieder auf einen größeren Wert als den minimalen Schwellenwert (SOCmin) zu bringen.

**8.** Hybridfahrzeug, umfassend einen Antriebsstrang, umfassend eine Wärmekraftmaschine (1), die eine mechanische Energie an die Räder (2) des Fahrzeugs liefert, mindestens eine elektrische Maschine (3), die eine elektrische Energie an die Räder (2) des Fahrzeugs liefert, Mittel (7) zur Wiedergewinnung von elektrischer Energie, Mittel (4) zum Speichern von elektrischer Energie, und Mittel (5) zur Übertragung der mechanischen und elektrischen Energien an die Räder (2) des Fahrzeugs, **dadurch gekennzeichnet, dass** es ferner Mittel (11) zur Steuerung umfasst, die das Verfahren nach einem der Ansprüche 1 bis 7 ausführen.

**Fig. 1**

**Fig. 2**

**Fig. 3**

Consommation
Carburant

Régime 3 (tr/min)
Régime 2 (tr/min)
Régime 1 (tr/min)

K

$b_3$  $b_2$  $b_1$

Puissance (kW)

## Fig. 4

11

4

7

3

1

①

5

2

## Fig. 5a

11

4

7

3

②

1

5

2

## Fig. 5b

état de charge
batterie (SOC)

SOC<
SOC max

oui          non

C = 0

C<0
C=f(SOC)

oui          non

G>C

**Fig. 6**

Eteindre moteur          Allumer moteur

11

4

7

3

1

③

5

2

**Fig. 7a**

11

4

7

3

1

④

5

2

**Fig. 7b**

Gain G (g/s)

zone de traction
en électrique pur

0                              Etat de charge batterie

SOC max

C=0

Critère d'arrêt du
moteur thermique (g/s)

C=f(SOC)

## Fig. 8

état de charge
batterie (SOC)

oui     SOC>
        SOC min    non

Puissance moteur=
puissance roue/
rendement transmission

Puissance moteur=
(puissance roue/
rendement transmission)
+ Pbat (SOC)

## Fig. 9

11 ⌇

4 ⌇

7 ⌇

3 ⌇

1 ⌇

⑤

**Fig. 10a**

5 ⌇

2 ⌇

11 ⌇

4 ⌇

7 ⌇

3 ⌇

1 ⌇

⑥

**Fig. 10b**

5 ⌇

2 ⌇

Puissance de la
batterie avec le
moteur thermique
allumé (kW)

Etat de charge batterie

La batterie est rechargée
par le moteur thermique

**Fig. 11**

**EP 2 074 005 B1**

**RÉFÉRENCES CITÉES DANS LA DESCRIPTION**

**Documents brevets cités dans la description**

- EP 0759370 A
- DE 19906601